# EUROPEAN PATENT APPLICATION

(11) **EP 4 653 228 A1**
(43) Date of publication of application: **26.11.2025**
(21) Application number: 24178051.9
(22) Date of filing: 24.05.2024
(51) Int. Cl.: B60K 35/22, B60K 35/29, B60K 35/40, B60K 35/81, B60R 1/24, B60W 50/00, B60W 50/14

(54) **METHOD FOR PROVIDING A SURROUNDINGS VIEW TO A DRIVER OF A VEHICLE, DATA PROCESSING APPARATUS, COMPUTER PROGRAM, COMPUTER-READABLE STORAGE MEDIUM, AND USE**

(71) Applicant: Volvo Car Corporation, 405 31 Göteborg (SE)
(72) Inventor: ERIKSSON, Alexander, 40531 Göteborg (SE); DZEBO, Damir, 40531 Göteborg (SE)
(74) Representative: Maiwald GmbH

(57) **Abstract**

The disclosure relates to a method for providing a surroundings view (32) to a driver of a vehicle (10) travelling on a driveable area (12). The surroundings view (32) is based on sensor data (D) provided by at least one sensor (14) configured to detect the surroundings (16). Moreover, the surroundings view (32) extends from a first lateral end (34) to a second lateral end (36). The method comprises obtaining first data (D1) indicative of a course of the driveable area (12) ahead of the vehicle (10). Additionally, the method comprises obtaining second data (D2) indicative of a travelling intention of the driver. Furthermore, the method comprises adapting at least one of the first lateral end (34) and the second lateral end (36) based on the first data (D1) and based on the second data (D2). Moreover, a data processing apparatus (18), a computer program (26), and a computer-readable storage medium (24) are presented. Also, a use of first data (D1) indicative of a course of a driveable area (12) ahead of a vehicle (10) and/or second data (D2) indicative of a travelling intention of a driver of the vehicle (10) is explained.

## Description

### TECHNICAL FIELD

The present disclosure relates to a method for providing a surroundings view to a driver of a vehicle travelling on a driveable area. The surroundings view is based on sensor data provided by at least one sensor configured to detect the surroundings.

Moreover, the present disclosure is directed to a data processing apparatus, to a computer program, and to a computer-readable storage medium.

The present disclosure also relates to a use.

### BACKGROUND ART

In this context, a surroundings view is a representation of the surroundings of the vehicle which is displayed to the driver of the vehicle. Another term for the surroundings of the vehicle is an environment of the vehicle. Such a surroundings view helps the driver of the vehicle to monitor the surroundings while driving. The surroundings may comprise one or more of a drivable area, a non-drivable area, other road users, obstacles and road signs. Consequently, the surroundings view helps the driver of the vehicle to perceive such elements of the surroundings. At the same time, the driver of the vehicle must not be distracted by the surroundings view.

### SUMMARY

Therefore, it is an objective of the present disclosure to further improve surroundings views such that the driver of the vehicle is able to see all relevant elements of the surroundings without being distracted.

The problem is at least partially solved or alleviated by the subject matter of the independent claims of the present disclosure, wherein further examples are incorporated in the SE:TOP dependent claims.

According to a first aspect, there is provided a method for providing a surroundings view to a driver of a vehicle. The vehicle is travelling on a driveable area. The surroundings view is based on sensor data provided by at least one sensor configured to detect the surroundings. The surroundings view extends from a first lateral end to a second lateral end, wherein the first lateral end is associated with a first limit position in the surroundings and the second lateral end is associated with a second limit position in the surroundings. The method comprises:
- obtaining first data indicative of a course of the driveable area ahead of the vehicle,
- obtaining second data indicative of a travelling intention of the driver, and
- adapting at least one of the first lateral end and the second lateral end based on the first data and based on the second data.

Consequently, a surroundings view may be provided to the driver of the vehicle which is both adapted to a course of the driveable area ahead of the vehicle and a traveling intention of the driver. In simplified words, the surroundings view considers where the driveable area ahead of the vehicle is going and where the driver would like to go. Consequently, the surroundings view may show a portion of the surroundings which is relevant for the driver of the vehicle. At the same time, a portion of the surroundings which is not relevant for a driver for the vehicle considering the course of the driveable area ahead of the vehicle and considering the traveling intention of the driver, may be excluded from the surroundings view. Consequently, a potential distraction of the driver is reduced or eliminated. Altogether, a cognitive load for the driver is reduced. This allows the driver to focus on relevant aspects of the surroundings, e.g. the driveable area, objects and/or other traffic participants. This may have road safety benefits.

In the present disclosure, the driveable area is to be understood as a surface on which the vehicle may travel. In an example, the driveable area may be a road. The road may be paved or non-paved. Additionally or alternatively, the driveable area may be a parking lot. Of course, these examples of driveable areas may be combined.

Moreover, the surroundings view with the adapted first lateral end and/or the adapted second lateral end may be associated with a portion of the surroundings which is considered and/or perceived by a driver assistance system, e.g. an autonomous driving system. Consequently, the surroundings view with the adapted first lateral end and/or the adapted second lateral end improves an understanding of a driver of the vehicle concerning the functioning and operation of the driver assistance system. In simplified words, the surroundings view which can be seen by the driver may correspond to the portions of the surroundings that can be perceived by a driver assistance system. This helps the driver to understand what the driver assistance system is doing.

Put otherwise, the present disclosure is directed to adapting a portion of a field of view of the sensor used for generating the surroundings view based on the course of the driveable area ahead of the vehicle and based on the driver's travelling intention.

In the context of the present disclosure, obtaining means determining or receiving. Thus, the first data and/or the second data may be determined using a data processing apparatus located in or on the vehicle. Alternatively, the first data and/or the second data may be received. In the latter case, the first data and/or the second data may be provided by a data processing apparatus located remote from the vehicle while communicatively connected to the vehicle. Such a data processing apparatus may be a server, e.g. a cloud server.

Further, in the context of the present disclosure, the first lateral end and the second lateral end of the surroundings view may refer to an end associated with a substantially horizontal extension of the surroundings view. Using a coordinate system of the vehicle, wherein a vehicle length direction is parallel to an x axis, a vehicle width direction is parallel to a y axis and a vehicle height direction is parallel to a z axis, the surroundings view may extend along the y axis and the first lateral end and the second lateral end of the surroundings view may refer to respective positions on the y axis. Consequently, the first limit position may define a position outside the vehicle, e.g. expressed in a coordinate on the x axis and a coordinate on the y axis, which is the most remote position on one side of the vehicle in the surroundings of the vehicle that is used for the surroundings view. Similarly, the second limit position may define a position outside the vehicle, e.g. expressed in a coordinate on the x axis and a coordinate on the y axis, which is the most remote position on the respective other side of the vehicle in the surroundings of the vehicle that is used for the surroundings view. It is understood that the first limit position and the second limit position need to be detectable by the sensor. However, the first limit position and the second limit position are not necessarily limit positions limiting the field of view or the field of detection of the sensor.

It is noted that the first limit position and the second limit position move together with the vehicle if the vehicle is moving. Consequently, a relative position between the vehicle and both the first limit position and the second limit position is kept constant. This applies at least with respect to the longitudinal direction of the vehicle. Moreover, it is possible that the first limit position and the second limit position move relative to the vehicle, even though the vehicle does not move. This may be the case if the first lateral end and/or the second lateral end of the surroundings view are adapted while the vehicle is standing still. This may be the case if the second data indicative of a travelling intention of the driver changes while the vehicle is standing still.

In the context of the present disclosure, the at least one sensor configured to detect the surroundings may be any kind of sensor suitable for detecting the surroundings. Examples of such a sensor include optical cameras, infrared cameras, ultrasonic sensors, lidar units and radar units. Consequently, the sensor data is for example image data, lidar data, radar data or data provided by an ultrasonic sensor. In a case the sensor comprises a wireless receiver such as a Wi-Fi receiver or a Bluetooth receiver, the associated sensor data may describe the surrounding in that the wireless receiver receives wireless signals from devices in the surroundings, e.g. mobile phones, key fobs or other vehicles. In this context, such a device may be carried by a person or a piece of technical equipment. Thus, such devices may be detected in the surroundings. Optionally, a distance between the wireless receiver forming the sensor and the detected device may be estimated based on the wireless signal. It is noted that the examples of sensors may be combined. The fact that the surroundings view is based on the sensor data implies that the surroundings view cannot go beyond the content of the sensor data. However, it is possible that the surroundings view is based only on a portion of the sensor data, i.e. it is possible that the surroundings view does not use all of the sensor data.

According to an example, the first data is based on the sensor data provided by the at least one sensor. Additionally or alternatively, the first data is based on map data. The map data is for example road map data. As has been mentioned before, examples of such a sensor include optical cameras, infrared cameras, lidar units and radar units. The map data may be received from a navigation system of the vehicle. Additionally or alternatively, the map data may be provided by a server to which the vehicle is communicatively connected. Both the sensor data and the map data provide a reliable indication of a course of the driveable area ahead of the vehicle. In this context, the sensor data and the map data may be indicative of one or more of lane-lines, road-edges, road-rails, curbs, pavements etc. Consequently, an appropriate adaptation of the surroundings view may be based thereon.

In an example, the first data comprises at least one representation of the course of the driveable area. This representation may comprise a curved line representing the course of the driveable area, e.g. a polynomial, or a poly line representing the course of the driveable area. According to another example, the representation comprises a plurality of points representing the course of the driveable area. It is possible that the representation of the course of the driveable area is extracted from the sensor data and/or the map data. Thus, a reliable representation of the course of the driveable area is provided.

According to an example, the second data comprises turn indicator data indicative of an activation status of a turn indicator of the vehicle. Additionally or alternatively, the second data comprises road wheel data indicative of a road wheel angle of a steered road wheel of the vehicle. Additionally or alternatively, the second data comprises steering wheel data indicative of an angular position of a steering wheel of the vehicle. Further additionally or alternatively, the second data comprises driver monitoring data which may be for example provided by a driver monitoring system. In this context, the activation status of the turn indicator provides an information whether the driver intends to turn left, turn right or not turn at all. The road wheel angle of the steered road wheel indicates into which direction the vehicle is traveling. Similarly, the angular position of the steering wheel indicates a direction into which the driver intends to travel. If the transmission ratio between the steering wheel and the steered road wheel is known, it is possible to calculate the road wheel angle from the angular position of the steering wheel and vice versa. It is noted that usually steering wheels may be rotated by more than 360°. Consequently, an associated traveling direction needs to be calculated from the angular position of the steering wheel by scaling the angular position of the steering wheel. The driver monitoring data may be indicative of one or more of a head position of the driver's head, a head movement of the driver's head, an eye position of at least one of the driver's eyes, an eye movement of at least one of the driver's eyes, and a direction of gaze of the driver. Also based on the driver monitoring data, a travelling intention of the driver may be derived. The mentioned alternatives may be used alone or in combination. Altogether, the driver's travelling intention may be determined in a reliable manner.

In an example, adapting at least one of the first lateral end and the second lateral end based on the first data and based on the second data comprises at least one of:
- laterally extending the surroundings view at the first lateral end,
- laterally extending the surroundings view at the second lateral end,
- laterally shortening the surroundings view at the first lateral end, and
- laterally shortening the surroundings view at the second lateral end,

As has been explained before, the first lateral end and the second lateral end of the surroundings view may refer to an end associated with a substantially horizontal extension of the surroundings view. Thus, depending on the course of the driveable area and the driver's traveling intention, the surroundings view may be extended at the first lateral end and/or the second lateral end. Similarly, the surroundings view may be cropped at the first lateral end and/or at the second lateral end. Thus, laterally extending the surroundings view also means that the first limit position in the surroundings and/or the second limit position in the surroundings are moved further away from the vehicle. This especially applies with respect to a lateral direction, e.g. the direction of the y axis. Laterally shortening the surroundings view means that the first limit position in the surroundings and/or the second limit position in the surroundings are moved closer to the vehicle. This especially applies with respect to a lateral direction, e.g. the direction of the y axis. Altogether, an appropriate surroundings view is provided.

In an example, adapting at least one of the first lateral end and the second lateral end based on the first data and based on the second data comprises adapting a scaling of the surroundings view. In other words, a zoom of the surroundings view is adapted, i.e. adapting at least one of the first lateral end and the second lateral end comprises zooming in or zooming out. Consequently, the surroundings view may show the relevant portions of the surroundings in a manner that is easily perceivable by the driver.

In an example, the surroundings view is a rendering based on the sensor data provided by the at least one sensor. This means that the surrounding view is synthesized based on the sensor data. In other words, the sensor data is not simply displayed, but processed in order to generate the surroundings view. The processing may comprise accentuating portions or elements of the sensor data, simplifying portions or elements of the sensor data or eliminating elements of the sensor data when generating the surroundings view. It is also possible that the surroundings view comprises elements which are not present in the sensor data. This further improves the surroundings view in terms of usability for the driver. Additionally, a cognitive load for the driver is reduced. This allows the driver to focus on relevant aspects of the surroundings, e.g. the driveable area, objects and/or other traffic participants. This may have road safety benefits.

According to an example, the surroundings view is rendering based on map data. The map data is for example road map data. This means that the surrounding view is synthesized based on the map data. In other words, the map data is not simply displayed, but processed in order to generate the surroundings view. This further improves the surroundings view in terms of usability for the driver. Additionally, a cognitive load for the driver is reduced. This allows the driver to focus on relevant aspects of the surroundings, e.g. the driveable area, objects and/or other traffic participants. This may have road safety benefits.

According to a further example, the surrounding view is rendered based on both sensor data and map data.

In an example, the method further comprises applying an object detection technique on the sensor data associated with the surroundings view. Moreover, the method comprises selecting one or more detected objects to be included in the surroundings view. Thus, objects located in the surroundings may be detected in the sensor data. The process of selecting one or more detected objects to be included in the surroundings view may result in showing all detected objects in the surroundings view, showing only some of the detected objects in the surroundings view or showing none of the detected objects in the surroundings view. Thus, selecting one or more detected objects may as well be described as ignoring one or more detected objects for the surroundings view. Representing less than all objects in the surroundings view for the driver reduces a cognitive load for the driver. This allows the driver to focus on relevant aspects of the surroundings, e.g. the driveable area, objects and/or other traffic participants. This may have road safety benefits.

According to an example, selecting one or more detected objects to be included in the surroundings view is based on the first data and/or on the second data. Thus, the selection of the one or more detected objects is based on the course of the driveable area and/or on the driver's traveling intention. This may comprise a categorization step, wherein the detected objects are classified as being relevant or nonrelevant based on the course of the driveable area and/or on the driver was traveling intention. In the following, only detected objects which are classified as being relevant may be included in the surroundings view. This further reduces a potential distraction, i.e. a cognitive load, for the driver. Thus, the driver may focus on relevant aspects of the surroundings, e.g. the driveable area, objects and/or other traffic participants. This may have road safety benefits.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the method of the present disclosure. Consequently, using such a data processing apparatus, a surroundings view may be provided to the driver of the vehicle which is both adapted to a course of the driveable area ahead of the vehicle and a traveling intention of the driver. In simplified words, the surroundings view considers where the driveable area ahead of the vehicle is going and where the driver would like to go. Consequently, the surroundings view may show a portion of the surroundings which is relevant for the driver of the vehicle. At the same time, a portion of the surroundings which is not relevant for a driver for the vehicle considering the course of the driveable area ahead of the vehicle and considering the traveling intention of the driver, may be excluded from the surroundings view. Consequently, a potential distraction of the driver is reduced or eliminated. Altogether, a cognitive load for the driver is reduced. This allows the driver to focus on relevant aspects of the surroundings, e.g. the driveable area, objects and/or other traffic participants. This may have road safety benefits.

According to a third aspect, there is provided a computer program comprising instructions which, when the computer program is executed by a computer, cause the computer to carry out the method of the present disclosure. Consequently, using such a computer program, a surroundings view may be provided to the driver of the vehicle which is both adapted to a course of the driveable area ahead of the vehicle and a traveling intention of the driver. In simplified words, the surroundings view considers where the driveable area ahead of the vehicle is going and where the driver would like to go. Consequently, the surroundings view may show a portion of the surroundings which is relevant for the driver of the vehicle. At the same time, a portion of the surroundings which is not relevant for a driver for the vehicle considering the course of the driveable area ahead of the vehicle and considering the traveling intention of the driver, may be excluded from the surroundings view. Consequently, a potential distraction of the driver is reduced or eliminated. Altogether, a cognitive load for the driver is reduced. This allows the driver to focus on relevant aspects of the surroundings, e.g. the driveable area, objects and/or other traffic participants. This may have road safety benefits.

According to a fourth aspect, there is provided a computer-readable storage medium comprising instructions which, when executed by a computer, cause the computer to carry out the method of the present disclosure. Consequently, using such a computer-readable storage medium, a surroundings view may be provided to the driver of the vehicle which is both adapted to a course of the driveable area ahead of the vehicle and a traveling intention of the driver. In simplified words, the surroundings view considers where the driveable area ahead of the vehicle is going and where the driver would like to go. Consequently, the surroundings view may show a portion of the surroundings which is relevant for the driver of the vehicle. At the same time, a portion of the surroundings which is not relevant for a driver for the vehicle considering the course of the driveable area ahead of the vehicle and considering the traveling intention of the driver, may be excluded from the surroundings view. Consequently, a potential distraction of the driver is reduced or eliminated. Altogether, a cognitive load for the driver is reduced. This allows the driver to focus on relevant aspects of the surroundings, e.g. the driveable area, objects and/or other traffic participants. This may have road safety benefits.

According to a fifth aspect, there is provided a use of first data indicative of a course of a driveable area ahead of a vehicle and second data indicative of a travelling intention of a driver of the vehicle for adapting at least one of a first lateral end and a second lateral end of a surroundings view provided to a driver of the vehicle. Consequently, a surroundings view may be provided to the driver of the vehicle which is both adapted to a course of the driveable area ahead of the vehicle and a traveling intention of the driver. In simplified words, the surroundings view considers where the driveable area ahead of the vehicle is going and where the driver would like to go. Consequently, the surroundings view may show a portion of the surroundings which is relevant for the driver of the vehicle. At the same time, a portion of the surroundings which is not relevant for a driver for the vehicle considering the course of the driveable area ahead of the vehicle and considering the traveling intention of the driver, may be excluded from the surroundings view. Consequently, a potential distraction of the driver is reduced or eliminated. Altogether, a cognitive load for the driver is reduced. This allows the driver to focus on relevant aspects of the surroundings, e.g. the driveable area, objects and/or other traffic participants. This may have road safety benefits.

In an example of the use, the first data is based on sensor data provided by at least one sensor and/or wherein the first data is based on map data. The map data is for example road map data. As has been mentioned before, examples of such a sensor include optical cameras, infrared cameras, lidar and radar. The map data may be received from a navigation system of the vehicle. Additionally or alternatively, the map data may be provided by a server to which the vehicle is communicatively connected. Both the sensor data and the map data provide a reliable indication of a course of the driveable area ahead of the vehicle. In this context, the sensor data and the map data may be indicative of one or more of lane-lines, road-edges, road-rails, curbs, pavements etc. Consequently, an appropriate adaptation of the surroundings view may be based thereon.

According to an example of the use, the second data comprises turn indicator data indicative of an activation status of a turn indicator of the vehicle. Additionally or alternatively, the second data comprises road wheel data indicative of a road wheel angle of a steered road wheel of the vehicle. Additionally or alternatively, the second data comprises steering wheel data indicative of an angular position of a steering wheel of the vehicle. In this context, the activation status of the turn indicator provides an information whether the driver intends to turn left, turn right or not turn at all. The road wheel angle of the steered road wheel indicates into which direction the vehicle is traveling. Similarly, the angular position of the steering wheel indicates a direction into which the driver intends to drive. If the transmission ratio between the steering wheel and the steered road wheel is known, it is possible to calculate the road wheel angle from the angular position of the steering wheel and vice versa. It is noted that usually steering wheels may be rotated by more than 360°. Consequently, an antenna traveling direction needs to be calculated from the angular position of the steering wheel. The mentioned alternatives may be used alone or in combination. Altogether, the driver's travelling intention may be determined in a reliable manner.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle comprising a data processing apparatus according to the present disclosure, a computer program according to the present disclosure and a computer-readable storage medium according to the present disclosure, wherein the data processing apparatus executes a method according to the present disclosure for providing a surroundings view to a driver of a vehicle,
- Figures 2 to 5: illustrate a driving scenario of the vehicle of Figure 1,
- Figure 6: illustrates a situation of the driving scenario of Figures 2 to 5 which would have happened without the use of the method according to the present disclosure, and
- Figure 7: illustrates steps of the method according to the present disclosure for providing a surroundings view to a driver of a vehicle.

The figures are merely schematic representations and serve only to illustrate examples of the disclosure. Identical or equivalent elements are in principle provided with the same reference signs.

### DETAILED DESCRIPTION

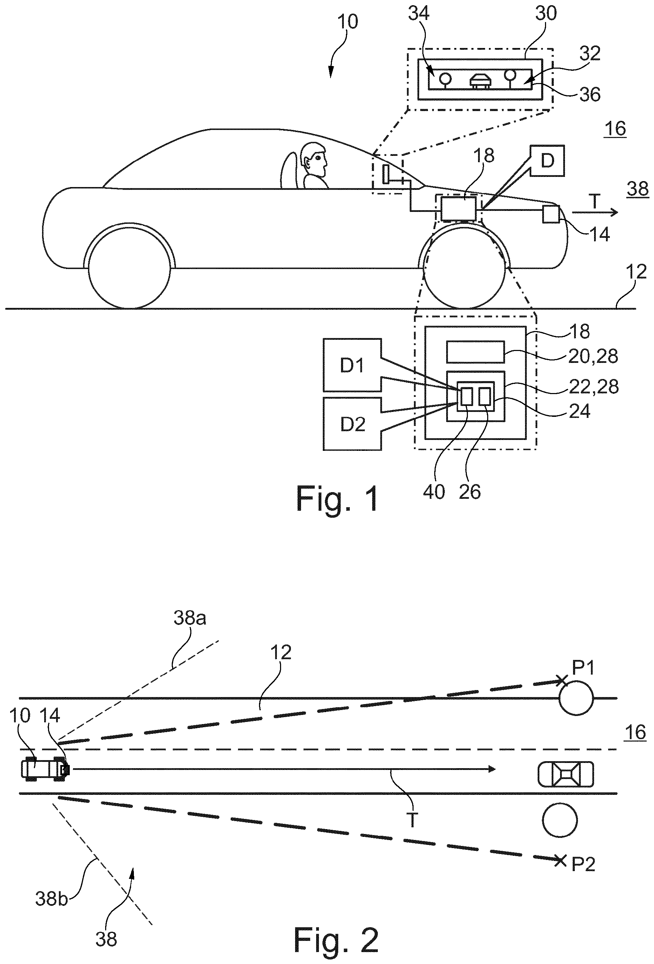

Figure 1 shows a vehicle 10 traveling on a driveable area 12 along a direction T indicated by an arrow. In the present example, the driveable area 12 is a road.

The vehicle 10 comprises a sensor 14 configured to detect surroundings 16 of the vehicle 10.

The sensor 14 may comprise any one of a radar unit, lidar unit, optical camera or ultrasonic sensor. It is also possible that the sensor 14 comprises a combination of two or more of these types of sensors.

The vehicle 10 further comprises a data processing apparatus 18 which is communicatively connected to the sensor 14.

The data processing apparatus 18 comprises a data processing unit 20 and a data storage unit 22.

The data storage unit 22 comprises a computer-readable storage medium 24.

On the computer-readable storage medium 24, there is provided a computer program 26.

The computer program 26 and, thus, the computer-readable storage medium 24 comprises instructions which, when executed by the data processing unit 20, or, more generally speaking, by a computer, cause the data processing unit 20 or the computer to carry out a method for providing a surroundings view to a driver of the vehicle 10.

Consequently, the data processing unit 20 and the data storage unit 22 form means 28 for carrying out the method for providing a surroundings view to a driver of the vehicle 10.

Furthermore, the vehicle 10 comprises a display unit 30. The display unit 30 is arranged in an interior of the vehicle 10 such that the driver is able to see the display unit 30. Moreover, the display unit 30 is configured to display a surroundings view 32 based on sensor data D provided by the sensor 14. In Figure 1, the surroundings view 32 is illustrated by two tree symbols and one vehicle symbol.

The surroundings view 32 extends from a first lateral end 34 which is represented on the left side of the display unit 30 in Figure 1 to a second lateral end 36 which is represented on the right side of the display unit 30 in Figure 1.

It is noted that in Figure 1, the display unit 30 is turned into the drawing plane. In reality, the display unit 30 is positioned in the interior of the vehicle 10 such that the driver may see the surroundings view 32 when looking straight ahead, i.e. along the traveling direction T.

The first lateral end 34 is associated with a first limit position P1 in the surroundings 16 and the second lateral end 36 is associated with a second limit position P2 in the surroundings 16 (see Figure 2).

It is noted that both the first limit position P1 and the second limit position P2 are located within a field of detection 38 of the sensor 14. However, the field of detection 38 goes beyond the first limit position P1 and the second limit position P2 on both lateral sides of the vehicle 10 with respect to the traveling direction T.

In Figure 2, the field of detection 38 extends between the dashed lines 38a and 38b. This means that the first limit position P1 is the left-most position within the field of detection 38 which is taken into consideration for the surroundings view 32. Similarly, the second limit position P2 is the right-most position within the field of detection 38 which is taken into consideration for the surroundings view 32.

It is noted that the surroundings view 32 is a rendering based on the sensor data D. This means that the sensor data D is not simply transmitted to the display unit 30, but the sensor data D is an output of a synthesizing method carried out by the data processing apparatus 18. The result of the synthesizing method is the image displayed on the display unit 30, i.e. the surroundings view 32.

As a further input, the synthesizing method may use map data 40 provided on the computer-readable storage medium 24. This mean that the map data 40 and the sensor data D may be combined in order to generate the surroundings view 32.

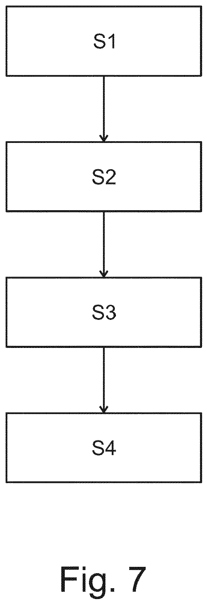

In the following, the method for providing a surroundings view 32 to the driver of the vehicle 10 will be explained in more detail with reference to Figures 2 to 7. Figures 2 to 6 illustrate a driving scenario which will be used for explaining the method. Figure 7 illustrates the steps of the method.

In this context, Figure 2 shows an initial situation of the driving scenario. The vehicle 10 is traveling along traveling direction T. The surroundings view 32 is based on the sensor data D, wherein the first lateral end 34 of the surroundings view 32 is associated with the first limit position P1 and the second lateral end 34 of the surroundings view 32 is associated with the second limit position P2 in the surroundings 16. In the situation of figure 2, the vehicle 10 is traveling on a straight segment of the driveable area 12 such that this surroundings view 32 is appropriate.

The method comprises obtaining first data D1 indicative of a course of the driveable area 12 ahead of the vehicle 10. This constitutes a first step S 1.

In the present example, the first data D1 is based on the sensor data D provided by the sensor 14. Additionally, the first data D1 is based on the map data 40. In the present example, the map data 40 is road map data.

Specifically, using the data processing apparatus 18, the sensor data D is analyzed such that a course of the driveable area 12 may be extracted from the sensor data D.

The extracted course of the driveable area 12 then is combined with the map data 40. This combination is considered a representation of the course of the driveable area 12 of the first data D 1.

The method also comprises a second step which relates to obtaining second data D2 indicative of a travelling intention of the driver.

In the present example, the second data D2 comprises turn indicator data indicative of an activation status of a turn indicator of the vehicle 10. To this end, the data processing apparatus 18 is communicatively connected to a turn indicator system of the vehicle 10 which is not shown in detail in the Figures.

Moreover, the second data D2 comprises road wheel data indicative of a road wheel angle of a steered road wheel of the vehicle 10. To this end, the data processing apparatus 18 is communicatively connected to a chassis control unit of the vehicle 10 which is not represented in detail in the Figures.

Furthermore, the second data D2 comprises steering wheel data indicative of an angular position of a steering wheel of the vehicle 10. To this end, the data processing apparatus 18 is communicatively connected to a steering system control unit which is not represented in detail in the Figures.

In a third step S3, at least one of the first lateral end 34 and the second lateral end 36 of the surroundings view 32 is adapted based on the first data D1 and based on the second data D2.

In the present example, this may be done by one or more of laterally extending the surroundings view 32 at the first lateral end 34, laterally extending the surroundings view 32 at the second lateral end 36, laterally shortening the surroundings 32 view at the first lateral end 34, and laterally shortening the surroundings view 32 at the second lateral end 36.

Moreover, adapting at least one of the first lateral end 34 and the second lateral end 36 may comprises adapting a scaling of the surroundings view 32, i.e. zooming in or zooming out.

Alternatively, a display surface of the display unit 30 may only be used partially. This means that the surroundings view 32 at the first lateral end 34 and/or at the second lateral end 36 may use the previously non-used portions of the display surface of the display unit 30. In such a case scaling the surroundings view 32 may not be necessary. In case the surroundings view 32 is to be shortened at the first lateral end 34 and/or the second lateral end 36, this may be done by deactivating, or simply not using, associated portions of the display surface of the display unit 30. Also in such a case scaling of the surrounding view 32 may not be necessary.

Additionally, using the data processing apparatus 18, an object detection technique is applied on the sensor data D. This object detection technique outputs a list of detected objects and an indication of a portion of the sensor data D describing these objects.

Based thereon, one or more of the detected objects may be selected to be included in the surroundings view 32 when synthesizing the surroundings view 32 based on the first data D1 and on the second data D2. Also the selection of objects to be included in the surroundings view 32 is based on the first data D1 and the second data D2.

Coming back to the situation of Figure 2, the first data D1 indicates that the driveable area 12 is going straight. Moreover, in the situation of Figure 2, none of the turn indicators is activated and both the steered wheels and the steering wheel are oriented straight ahead, i.e. along the straight driveable area 12.

Thus, in the situation of Figure 2, there is no need to adapt the surroundings view 32.

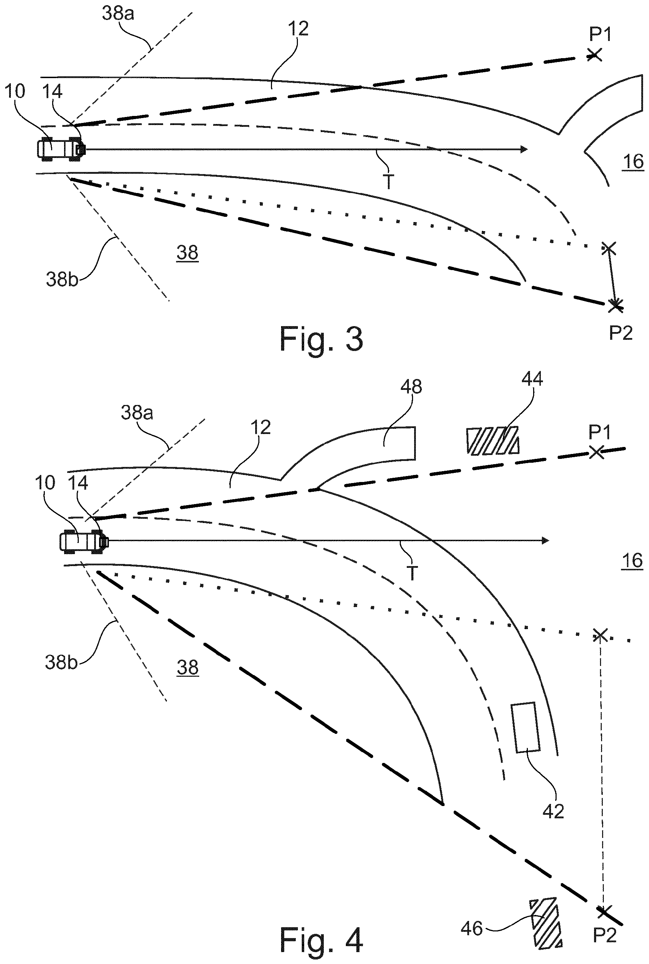

Figure 3 represents another situation of the driving scenario which may occur at a point in time after the situation of Figure 2.

While the second data D2 remains the same as in the situation of Figure 2, now the first data indicates a different course of the driveable area 12. In more detail, the second data D2 indicate that the driveable area 12 comprises a right curve to which the vehicle 10 is approaching.

Due to the fact that no change has occurred in the second data D2, it is expected that the vehicle 10 travels along the driveable area 12, i.e. along the curve. Therefore, the surroundings view 32 is adapted in that the surroundings view 32 is extended at the second lateral end 36. As compared to the situation of Figure 2, this means that the second limit position P2 is moved further to the right with respect to the traveling direction T.

This has the effect that the driver may see more of the surroundings into which he or she is driving.

Furthermore, extending the surroundings view 32 at the second lateral end 36 makes it necessary to zoom out in order to fit the surroundings view 32 on the display unit 30. Alternatively, the display surface of the display unit 30 may be used partially as has been explained before.

Figure 4 represents a further situation of the driving scenario which may occur at a point in time after the situation of Figure 3. In this situation, the vehicle 10 has further approached the curve.

While the second data D2 still remains the same as in the situation of Figures 2 and 3, now the first data D1 is indicative of a larger portion of the right curve to which the vehicle 10 is approaching.

Due to the fact that no change has occurred in the second data D2, it is still expected that the vehicle 10 travels along the driveable area 12, i.e. along the curve. Therefore, the surroundings view 32 is adapted in that the surroundings view 32 is further extended at the second lateral end 36. As compared to the situation of Figure 3, this means that the second limit position P2 is moved further to the right with respect to the traveling direction T.

This has the effect that the driver may see more of surroundings into which he or she is driving.

In the specific case of Figure 4, extending the surroundings view 32 has the effect that an object 42, which is a vehicle in the present example, is considered for synthesizing the surroundings view 32 since the object 42 now is located within the portion of the field of detection 38 on which the surroundings view 32 is based. Consequently, a representation of the object 42 is shown in the surroundings view 32 provided to the driver on the display unit 30.

Furthermore, extending the surroundings view 32 at the second lateral end 36 makes it necessary to zoom out in order to fit the surroundings view 32 on the display unit 30. Alternatively, the display surface of the display unit 30 may be used partially as has been explained before.

It is noted that in the situation of Figure 4, also objects 44, 46 are arranged within the field of detection 38 of the sensor 14 i.e. also the object 44, 46 are detected by the sensor 14, however these objects 44, 46 are not considered or selected for the surroundings view 32.

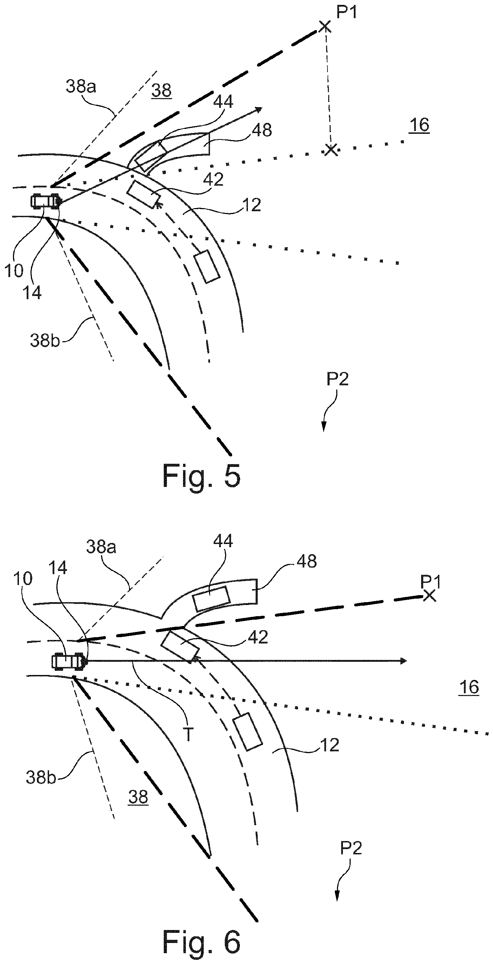

Figure 5 represents a further situation of the driving scenario which may occur at a point in time after the situation of Figure 4. In this situation, the vehicle 10 has further approached the curve.

In contrast to the previous situations, now the second data D2 indicate that the turn indicators on the left side of the vehicle 10 are activated. Furthermore, the second data d2 indicates that the steering wheel has been turned to the left and that the steered wheels of the vehicle 10 also have been turned to the left. Based thereon, it is concluded that the driver of the vehicle 10 intends to take a left.

In the situation of Figure 5 this is the case because the driver seemingly intends to drive into the side road 48 which had not been detected so far.

Therefore, the surroundings view 32 is adapted in that the surroundings view 32 is extended at the first lateral end 34. As compared to the situation of Figure 4. This means that the first limit position P1 is moved further to the left with respect to the traveling direction T.

This has the effect that the driver may see more of surroundings into which he or she is driving.

In the specific case of Figure 5, extending the surroundings view 32 has the effect that the object 44, which is a vehicle in the present example which has moved along the side road 48, is considered for synthesizing the surroundings view 32 since the object 44 now is located within the portion of the field of detection 38 on which the surroundings view 32 is based. Consequently, a representation of the object 44 is shown in the surroundings view 32 provided to the driver on the display unit 30.

Furthermore, extending the surroundings view 32 at the first lateral end 34 makes it necessary to zoom out in order to fit the surroundings view 32 on the display unit 30. Alternatively, the display surface of the display unit 30 may be used partially as has been explained before.

It is noted that in the situation of Figure 5, object 42 has further moved towards the vehicle 10.

Moreover, in the situation of Figure 5, the surroundings view 32 is not adapted at its second lateral end 36, i.e. at its right end.

In order to better understand the effects of the method for providing a surroundings view 32, Figure 6 illustrates a situation similar to the situation of Figure 5, wherein the surroundings view 32 is not adapted.

Thus, in the situation of Figure 6, object 44 is not considered for synthesizing the surroundings view 32.

In other words, Figure 6 illustrates a situation in which only the first data is considered for synthesizing the surroundings view 32, wherein Figure 5 illustrates a situation where in both first data D1 and second data D2 is considered.

More precisely, first data D1 indicative of a course of a driveable area 12 ahead of a vehicle 10 and second data D2 indicative of a travelling intention of a driver of the vehicle 10 are used for adapting at least one of a first lateral end 34 and a second lateral end 36 of a surroundings view 32 provided to a driver of the vehicle 10.

As has been mentioned before, the first data D1 is based on sensor data D provided by sensor 14 and on map data 40.

As has been mentioned before, the driveable area 12 is a road in the present example. Moreover, the map data 40 is road map data.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: driveable area
- 14: sensor
- 16: surroundings
- 18: data processing apparatus
- 20: data processing unit
- 22: data storage unit
- 24: computer-readable storage medium
- 26: computer program
- 28: means for carrying out a method for providing a surroundings view to a driver
- 30: display unit
- 32: surrounding view
- 34: first lateral end of the surroundings view
- 36: second lateral end of the surroundings view
- 38: field of detection of the sensor
- 38a: line delimiting field of detection
- 38b: line delimiting field of detection
- 40: map data
- 42: object
- 44: object
- 46: object
- 48: side road

- D: sensor data
- D1: first data
- D2: second data
- P1: first limit position
- P2: second limit position
- S1: first step
- S2: second step
- S3: third step
- T: travelling direction

## Claims

1. A method for providing a surroundings view (32) to a driver of a vehicle (10) travelling on a driveable area (12), wherein the surroundings view (32) is based on sensor data (D) provided by at least one sensor (14) configured to detect the surroundings (16), wherein the surroundings view (32) extends from a first lateral end (34) to a second lateral end (36), and wherein the first lateral end (34) is associated with a first limit position (P1) in the surroundings (16) and the second lateral end (36) is associated with a second limit position (P2) in the surroundings (16), the method comprising:
- obtaining first data (D1) indicative of a course of the driveable area (12) ahead of the vehicle (10) (S1),
- obtaining second data (D2) indicative of a travelling intention of the driver (S2), and
- adapting at least one of the first lateral end (34) and the second lateral end (36) based on the first data (D1) and based on the second data (D2).

2. The method of claim 1, wherein the first data (D1) is based on the sensor data (D) provided by the at least one sensor (14) and/or wherein the first data (D1) is based on map data (40).

3. The method of claim 1 or 2, wherein the first data (D1) comprises at least one representation of the course of the driveable area (12).

4. The method of any one of the preceding claims, wherein the second data (D2) comprises turn indicator data indicative of an activation status of a turn indicator of the vehicle (10) and/or road wheel data indicative of a road wheel angle of a steered road wheel of the vehicle (10) and/or steering wheel data indicative of an angular position of a steering wheel of the vehicle (10).

5. The method of any one of the preceding claims, wherein adapting at least one of the first lateral end (34) and the second lateral end (36) based on the first data (D1) and based on the second data (D2) comprises at least one of:
- laterally extending the surroundings view (32) at the first lateral end (34),
- laterally extending the surroundings view (32) at the second lateral end (36),
- laterally shortening the surroundings view (32) at the first lateral end (34), and
- laterally shortening the surroundings view (32) at the second lateral end (36),

6. The method of any one of the preceding claims, wherein adapting at least one of the first lateral end (34) and the second lateral end (36) based on the first data (D1) and based on the second data (D2) comprises adapting a scaling of the surroundings view (32).

7. The method of any one of the preceding claims, wherein the surroundings view (32) is a rendering based on the sensor data (D) provided by at least one sensor (14).

8. The method of any one of the preceding claims, further comprising applying an object detection technique on the sensor data (D) associated with the surroundings view (32) and selecting one or more detected objects to be included in the surroundings view (32).

9. The method of claim 8, wherein selecting one or more detected objects to be included in the surroundings view is based on the first data (D1) and/or on the second data (D2).

10. A data processing apparatus (18) comprising means (28) for carrying out the method of any one of the preceding claims.

11. A computer program (26) comprising instructions which, when the computer program (26) is executed by a computer, cause the computer to carry out the method of claims 1 to 9.

12. A computer-readable storage medium (24) comprising instructions which, when executed by a computer, cause the computer to carry out the method of claims 1 to 9.

13. A use of first data (D1) indicative of a course of a driveable area (12) ahead of a vehicle (10) and second data (D2) indicative of a travelling intention of a driver of the vehicle (10) for adapting at least one of a first lateral end (34) and a second lateral end (36) of a surroundings view (32) provided to a driver of the vehicle (10).

14. The use of claim 13, wherein the first data (D1) is based on sensor data (D) provided by at least one sensor (14) and/or wherein the first data (D1) is based on map data (40).

15. The use of claim 13 or 14, wherein the second data (D2) comprises turn indicator data indicative of an activation status of a turn indicator of the vehicle (10) and/or road wheel data indicative of a road wheel angle of a steered road wheel of the vehicle (10) and/or steering wheel data indicative of an angular position of a steering wheel of the vehicle (10).
